# EUROPÄISCHE PATENTANMELDUNG

(11) **EP 2 161 533 A1**
(43) Veröffentlichungstag der Anmeldung: **10.03.2010**
(21) Anmeldenummer: 09010887.9
(22) Anmeldetag: 26.08.2009
(51) Int. Cl.: F41G 7/22

(54) **Gegenstandserfassungssystem mit einem Bilderfassungssystem**

(30) Priorität: 09.09.2008 DE 102008046362
(71) Anmelder: Diehl BGT Defence GmbH & Co.KG, 88662 Überlingen (DE)
(72) Erfinder: Mayer, Hans-Rainer, 78333 Stockach/Hindelwangen (DE); Baumann, Rainer, 88662 Überlingen (DE); Barenz, Joachim, 88662 Überlingen (DE); Romasew, Eugen, 88662 Überlingen (DE); Tholl, Hans Dieter, 88690 Uhldingen-Mühlhofen (DE)
(74) Vertreter: Diehl Patentabteilung

(57) **Zusammenfassung**

Die Erfindung geht aus von einem Gegenstandserfassungssystem (8) mit einem Bilderfassungssystem mit einem bildgebenden Detektor (26), einem Positionserfassungssystem mit einem positionsgebenden Detektor (24) und einer Optik (10), die einfallende Strahlung auf beide Detektoren (24, 26) lenkt.

Es wird vorgeschlagen, dass beide Detektoren (24, 26) im Strahlengang (20) hintereinander, insbesondere aneinander, angeordnet sind. Dadurch kann ein einfaches, kompaktes und zuverlässiges Gegenstandserfassungssystem (8) erreicht werden.

## Beschreibung

Die Erfindung betrifft ein Gegenstandserfassungssystem mit einem Bilderfassungssystem mit einem bildgebenden Detektor, einem Positionserfassungssystem mit einem positionsgebenden Detektor, und einer Optik, die einfallende Strahlung auf beide Detektoren lenkt.

Zum Lenken von unbemannten Flugkörpern in Richtung auf ein Ziel sind verschiedene optische Systeme zum Erfassen und im Blick halten eines Ziels bekannt. Bei einem passiven Lenksystem kann das Ziel vor Abschuss des Flugkörpers von einem Bediener ausgewählt werden und ein Referenzbild der Zielszene mit dem markierten Ziel kann dem Flugkörper übergeben werden. Beim Zielanflug wird das Ziel vom Flugkörper aufgrund des Referenzbilds erfasst, das aufgrund seines geringen Alters von wenigen Sekunden eine hohe Aktualität besitzt, und der Flugkörper kann selbständig das Ziel ansteuern.

Bei einem halbaktiven Laserlenksystem wird das von einem Bediener ausgewählte Ziel mit einem Markierungslaser beleuchtet, und ein Positionserfassungssystem des Flugkörpers erfasst die Winkelablage des beleuchteten Flecks relativ zu seinem Gesichtsfeld mittels Abbildung der vom beleuchteten Fleck reflektierten Strahlung auf den positionsgebenden Detektor. Der Grad der Winkelablage wird dabei über die Position bzw. die Lage des abgebildeten beleuchteten Flecks auf der strahlungsempfindlichen Fläche des positionsgebenden Detektors ermittelt. Entsprechend der ermittelten Winkelablage wird der Flugkörper in Richtung des beleuchteten Flecks gesteuert und so in das Ziel geführt. Die Zielbeleuchtung muss hierbei aufrecht erhalten bleiben, bis der Flugkörper das Ziel erreicht. Die Beleuchtung kann durch einen vorgeschobenen Beobachter vorgenommen werden. Bei der Beleuchtung wird typischerweise mit gepulster Strahlung und Pulswiederholraten von etwa 10 - 20 Hz gearbeitet, wobei die Pulswiederholrate der Kodierung des Laserdesignators dient, um auch bei mehreren beleuchteten Zielen im Suchergesichtsfeld das richtige Ziel anfliegen zu können. Dem Flugkörper wird vor dem Abschuss der Pulscode des Zielbeleuchters übergeben. Ein Positionserfassungssystem ist beispielsweise aus der DE 10 2004 029 343 A1 bekannt.

Um eine Gefährdung eines Beleuchters, beispielsweise eines vorgeschobenen Beobachters, zu reduzieren, ist es bekannt, das Ziel nur kurze Zeit, beispielsweise eine Sekunde, zu beleuchten und dem Flugkörper hierdurch das Ziel zuzuweisen. Der Flugkörper besitzt die Eigenschaft, im Sinne eines Dual-Mode-Systems, Ziele die mit einem Laserzielbeleuchter markiert sind, durch ein bildgebendes System zu erkennen. Nach der Übergabe des Ziels durch die Zielbeleuchtung und der Positionserfassung bzw. genauer gesagt der Ermittlung der Winkelablage des Flugkörpers zum Ziel mittels des Positionserfassungssystems des Flugkörpers kann der Flugkörper passiv mit Hilfe des Bilderfassungssystems in das Ziel gelenkt werden.

Es ist eine Aufgabe der vorliegenden Erfindung, ein Gegenstandserfassungssystem anzugeben, mit dem ein Gegenstand zuverlässig als Ziel erfasst und in einer Zielszene verfolgt werden kann, so dass ein Flugkörper zuverlässig in das Ziel gesteuert werden kann.

Diese Aufgabe wird durch ein Gegenstandserfassungssystem der eingangs genannten Art gelöst, bei dem beide Detektoren im Strahlengang hintereinander, insbesondere aneinander, angeordnet sind. Der Strahlengang wird somit zuerst zu dem einen Detektor geführt und danach wird der gleiche Strahlengang zum anderen Detektor geführt. Durch die Hintereinanderanordnung der Detektoren ist wertvoller Bauraum einsparbar und die Optik kann sowohl für den bildgebenden Detektor als auch für den positionsgebenden Detektor verwendet werden, sodass ein System mit einer geringen Komplexität erreicht und kompakt aufgebaut werden kann.

Zweckmäßigerweise sind die beiden Detektoren aneinander angeordnet, beispielsweise unmittelbar aneinander oder nur durch eine Schicht voneinander getrennt, beispielsweise eine Klebeschicht oder eine optisch aktive Schicht, wie einen Filter.

Die Detektoren sind vorteilhafterweise unbeweglich zu einem Flugkörpergehäuse befestigt.

Vorzugsweise ist der bildgebende Detektor zum Zweck der Erhöhung seiner Empfindlichkeit an der Kühleinheit eines Kühlers befestigt. Bei dem Kühler kann es sich beispielsweise um einen Kühlfinger handeln. Selbstverständlich ist es denkbar, auch für den positionsgebenden Detektor eine Kühlungsmöglichkeit vorzusehen.

Geschickterweise weist die Optik ein optisches Element auf, das den Strahlengang sowohl auf den bildgebenden Detektor abbildet als auch auf den positionsgebenden Detektor lenkt. Das optische Element lenkt also den gleichen Strahlengang sowohl auf den bildgebenden Detektor als auch auf den positionsgebenden Detektor. Es kann somit auf den positionsgebenden Detektor gelenkte Strahlung auch auf den bildgebenden Detektor lenken. Es ist zweckmäßigerweise das im Strahlengang letzte strahlformende oder strahlablenkende optische Element vor den Detektoren und kann eine Linse, ein Spiegel, ein Prisma oder eine Planoptik sein. Der auf den bildgebenden Detektor abgebildete Strahlengang wird zweckmäßigerweise vollständig auf den positionsgebenden Detektor gelenkt. Das Abbilden des Strahlengangs auf den bildgebenden Detektor kann erfolgen, indem der bildgebende Detektor in einer Bildebene des Strahlengangs angeordnet ist.

Das Gegenstandserfassungssystem kann Bestandteil eines Suchkopfs eines Flugkörpers sein. Das Bilderfassungssystem dient zum Erfassen eines Bilds, auf dem ein Gegenstand, der als Ziel markiert sein kann, abgebildet ist. Der bildgebende Detektor kann ein Punktdetektor, Zeilendetektor oder Matrixdetektor sein. Im Falle eines Punkt- oder Zeilendetektors kann das den Gegenstand wiedergebende Bild durch Scannen sequenziell aufgenommen und zum fertigen Bild zusammengesetzt werden. Das Positionserfassungssystem dient zum Erfassen einer Position bzw. Ermittlung einer Winkelablage des Gegenstands relativ zu einem Koordinatensystem, das beispielsweise fest mit einer Flugkörperachse verbunden ist. Der positionsgebende Detektor kann so ausgeführt sein, dass er Winkelkoordinaten ausgibt, die dem Ablagewinkel des anvisierten Ziels relativ zum festen Koordinatensystem entsprechen. Die Winkelablage kann einfach, mehrfach oder kontinuierlich erfasst werden. Entsprechend der Position kann beispielsweise die Optik mit dem Gegenstand mitgeführt und eine Sichtliniendrehrate erfasst werden, die zum Steuern des Flugkörpers herangezogen wird. Alternativ kann der Flugkörper bei einer Optik, die unbeweglich im Flugkörper angeordnet ist, anhand der Position selbst gesteuert werden, wobei die Position beispielsweise durch eine entsprechende Steuerung des Flugkörpers in der Flugkörperachse gehalten bleibt.

Vorteilhafterweise ist der positionsgebende Detektor für Strahlung, für die der bildgebende Detektor empfindlich ist, durchlässig. Die beiden Detektoren können hintereinander im Strahlengang angeordnet sein, ohne dass der hintere Detektor eine Abschattung erfährt. Eine Durchlässigkeit ist gegeben bei einem Transmissionsgrad von zumindest 50 %, insbesondere zumindest 80 %.

In einer weiteren vorteilhaften Ausführungsform der Erfindung sind beide Detektoren in der Bildebene des Strahlengangs angeordnet. Sowohl der Gegenstand als auch der Beleuchtungsfleck können auf den beiden Detektoren scharf abgebildet werden. Als Bildebene wird in diesem Zusammenhang eine Ebene mit einer Dicke senkrecht zu optischen Achse des Strahlengangs verstanden, die 10 % der Brennweite des Strahlengangs in der Bildebene, insbesondere 3 %, nicht überschreitet.

Zur Realisierung des Positionserfassungssystems ist ein Lateraleffekt-Detektor vorteilhaft, der zweckmäßigerweise starr vor dem bildgebenden Detektor angeordnet ist. Ein Lateraleffekt-Detektor kann sehr kompakt aufgebaut sein und transmissiv für mittleres Infrarot und fernes Infrarot ausgeführt sein, sodass ein in diesen Wellenlängenbereichen arbeitender bildgebender Detektor ohne Abschattung hinter dem Lateraleffekt-Detektor angeordnet werden kann. Als Detektorsubstrat des positionsgebenden Detektors ist hochreines Silizium vorteilhaft. Ein Lateraleffekt-Detektor kann außerdem sehr groß, beispielsweise bis zu (20 mm)², ausgeführt werden, sodass sein Gesichtsfeld einen großen Winkelbereich abdeckt. Ein großes Gesichtsfeld kann zur sicheren Zielerfassung genutzt werden, da bei einem indirekten Abschuss mit ballistischer Flugbahn in Richtung zum Ziel eine große Winkelstreuung auftreten kann.

Ein weiterer Vorteil von Lateraleffekt-Detektoren, Detektoren mit einer durchgängig strahlungsempfindlichen Fläche, besteht darin, dass sie ungekühlt betrieben werden können, wobei durch den Verzicht auf eine Kühlungsmöglichkeit sowohl die dafür erforderlichen Kosten als auch Bauraum einsparbar sind.

Vorteilhafterweise decken beide Detektoren unterschiedlich große Gesichtsfelder ab. Während das Gesichtsfeld des positionsgebenden Detektors vorteilhafterweise groß ist, beispielsweise einen Durchmesser von zumindest 5° Grad, bevorzugt von zumindest 15° Grad, aufweist, kann das Gesichtsfeld des bildgebenden Detektors klein, d.h. beispielsweise unter 5° Grad oder sogar unter 1° Grad, gehalten bleiben, da die Ausrichtung des kleinen Gesichtsfelds auf das Ziel durch den positionsgebenden Detektor erfolgen kann. Durch das kleine Gesichtsfeld kann eine hohe Winkelauflösung des bildgebenden Detektors erreicht werden.

Natürlich ist es auch denkbar, die Gesichtsfelder der beiden Detektoren gleich groß auszulegen. Dies bietet den Vorteil, dass eine gesteigerte Funktionalität erzielbar ist. Ist beispielsweise über den bildgebenden Detektor nur ein Bild in unzureichender Qualität erhältlich, kann über den positionsgebenden Detektor nochmals die Lage des Ziels in Bezug auf den Flugkörper ermittelt werden. Es ist also eine gegenseitige Kontrollmöglichkeit der beiden Detektoren untereinander gegeben. Das Resultat, das einer der Detektoren liefert, kann also durch das Resultat, das der andere Detektor liefert, abgesichert werden. Dadurch ist eine besonders zuverlässige Führung des Flugkörpers ins Ziel möglich.

Zweckmäßigerweise liegt das Gesichtsfeld des bildgebenden Detektors im Gesichtsfeld, insbesondere zentriert im Gesichtsfeld, des positionsgebenden Detektors. Eine einfache Geometrie der Optik kann erreicht werden, wenn der bildgebende Detektor zentriert zum positionsgebenden Detektor angeordnet ist.

Außerdem wird vorgeschlagen, dass der positionsgebende Detektor starr auf einem Gehäuse des bildgebenden Detektors aufgebracht ist. Zusätzliche Haltelemente können vermieden und das System kann kompakt ausgeführt werden.

Einer hohen Kompaktheit ist ebenfalls gedient, wenn der positionsgebende Detektor ein Eintrittsfenster des bildgebenden Detektors bildet. Dieses kann mit einem Spektralfilter beschichtet sein, zweckmäßigerweise auf der vom bildgebenden Detektor abweisenden Seite, zum Filtern für Strahlung zum bildgebenden Detektor.

Unabhängig von seiner Position ist der Spektralfilter zweckmäßigerweise so ausgeführt, dass er ein Transmissionsfenster im Wellenlängenbereich des positionsgebenden Detektors, ein Transmissionsfenster im Wellenlängenbereich des bildgebenden Detektors und einen strahlungsundurchlässigen Bereich zwischen den beiden Transmissonsfenstem aufweist. Es kann ein einziger Spektralfilter für beide Detektoren verwendet werden, sodass das Gegenstandserfassungssystem kompakt gehalten werden kann.

Sind beide Detektoren jeweils mit einer eigenen Kühleinheit verbunden, wobei die Kühleinheiten ineinander angeordnet sind, so kann das Gegenstandserfassungssystem ebenfalls kompakt und einfach ausgeführt sein.

Zur exakten Erfassung der Position des anvisierten Ziels ist es vorteilhaft, wenn Detektorausgänge des positionsgebenden Detektors zur Unterdrückung von Hintergrundstrahlung über einen Koppelkondensator mit einer Verstärkerelektronik verbunden sind, so dass sich eine Bias-T-Schaltung ergibt.

Bevorzugt ist auf die Detektorausgänge des positionsgebenden Detektors eine DC-Vorspannung aufgeschaltet, um die Geschwindigkeit des Detektors zu erhöhen und damit die Bandbreite zu vergrößern. Ist der zuvor erwähnte Koppelkondensator dabei der Zuführung der DC-Vorspannung nachgeordnet, so kann er nicht nur für eine Unterdrückung von Hintergrundstrahlung, sondern auch für die Auskopplung der DC-Vorspannung bzw. für eine AC-Kopplung sorgen.

Beim Anfliegen des Ziels wird - bei zeitlich gleichmäßig beleuchtetem Ziel - die vom positionsgebenden Detektor erfasste Strahlungsintensität des positionsgebenden Strahlers stärker. Um ein Erreichen des Sättigungsbereichs des positionsgebenden Detektors zu vermeiden, ist es vorteilhaft, wenn das Gegenstandserfassungssystem einen Verstärker für Signale des positionsgebenden Detektors aufweist, der zu einer variablen Anpassung der Verstärkung ausgebildet ist.

Außerdem umfasst das Gegenstandserfassungssystem vorteilhafterweise ein Steuermittel zur Steuerung der Positionserfassung und zweckmäßigerweise der Bildverarbeitung des Bilderfassungssystems.

Ist im Steuermittel ein Speicher vorhanden, in dem eine Positionskalibrierung des positionsgebenden Detektors hinterlegt ist, so kann ein geringer mechanischer Justageaufwand des positionsgebenden Systems durch eine elektronische Kalibrierung erreicht werden.

Weitere Vorteile ergeben sich aus der folgenden Zeichnungsbeschreibung. In der Zeichnung ist ein Ausführungsbeispiel der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig. 1: eine schematische Darstellung eines Gegenstandserfassungssystems mit einer Cassegrain-Optik und zwei aneinander befestigten Detektoren in der Bildebene der Optik und
- Fig. 2: eine schematische Schaltungsdarstellung eines positionsgebenden Detektors.

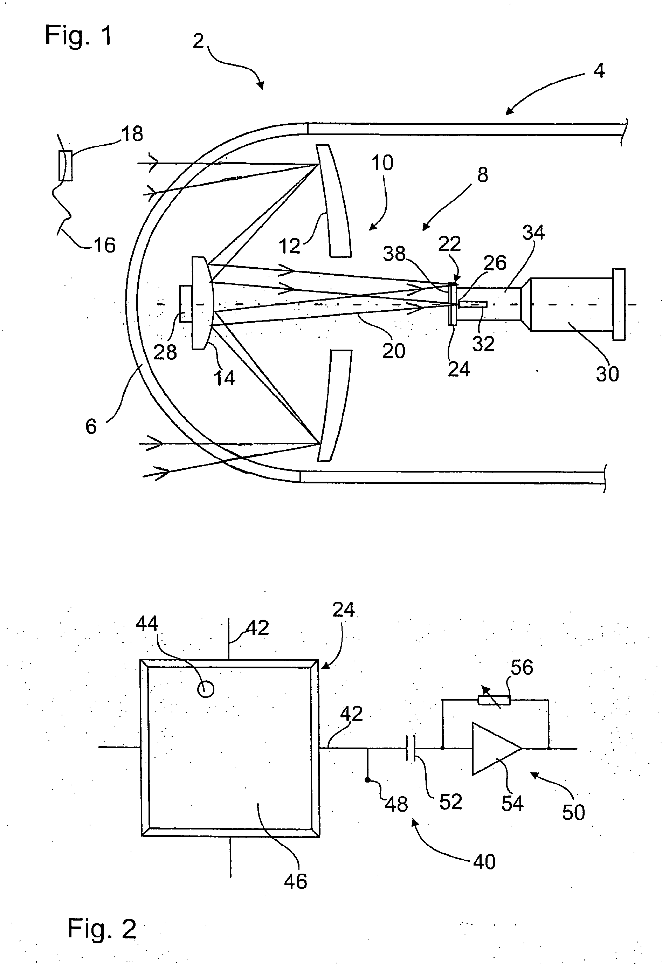

Figur 1 zeigt einen Suchkopf 2 im vorderen Teil eines Flugkörpers 4 mit einem kuppelförmigen Sichtfenster 6, hinter dem ein Gegenstandserfassungssystem 8 angeordnet ist. Dieses enthält eine Optik 10 in Form einer Cassegrain-Optik mit zwei Spiegeln 12, 14, mit denen Strahlung aus einer Objektszene 16 mit einem Ziel 18 in einem Strahlengang 20 auf ein Detektorsystem 22 abgebildet wird. Das Detektorsystem 22 umfasst einen positionsgebenden Detektor 24 und einen bildgebenden Detektor 26, der im Strahlengang 20 unmittelbar hinter dem positionsgebenden Detektor 24 angeordnet ist. Der Spiegel 14 ist ein optisches Element, das den Strahlengang 20 sowohl auf den Bildgebenden Detektor 26 lenkt, als auch den gleichen Strahlengang bzw. die gleiche Strahlung auf den Detektor 24, z.B. Strahlung im fernen Infrarot, die den Detektor 24 passiert und auf den Detektor 26 gelenkt wird.

Das Gegenstandserfassungssystem 8 umfasst eine luftgelagertes Kreiselsystem mit einem Kreisel 28, der von einem Steuermittel 30 überwacht wird, das auch als Auswerteelektronik für die beiden Detektoren 24, 26 dient. Der Kreisel 28 ist mit der Optik 10 verbunden, die die Abbildung der einfallenden Zielstrahlung auf den großflächigen positionsgebenden Detektor 24 und den erheblich kleineren bildgebenden Detektor 26 durchführt. Die Optik 10 führt die Strahlung auf die beiden Detektoren 24, 26 und deckt so aufgrund der unterschiedlichen Detektorgrößen zwei unterschiedliche Gesichtsfelder ab. Der bildgebende Detektor 26 sitzt auf einem Kühlfinger 32 und besitzt nur ein kleineres Gesichtsfeld. Der größere positionsgebende Detektor 24 ist mit einem Gehäuse 34 des bildgebenden Detektors 26 verbunden, der um den Kühlfinger 32 herumgeführt ist. Beide Detektoren 24, 26 sind über das Gehäuse 34 starr relativ zum Gehäuse des Flugkörpers 4 befestigt.

Der bildgebende Detektor 26 ist als Zeilendetektor ausgeführt, dessen einzelne Abbildungen in einem Scannbetrieb zum Gesamtbild der Objektszene 16 zusammengesetzt wird. Das metallische Gehäuse 34 wird zur Befestigung des positionsgebenden Detektors 24 verwendet. Der positionsgebende Detektor 24 ist im nahen Infrarot-Spektralbereich empfindlich und detektiert Laserstrahlung eines im nahen Infrarot strahlenden Zielmarkierers und leitet daraus die Winkelablage des anvisierten Ziels ab.

Der positionsgebende Detektor 24 ist ein Lateraleffekt-Detektor. Das auf seine aktive Fläche fallende Infrarot-Licht generiert einen Fotostrom, der in Richtung des p- und des n-dotierten Gebietes abfließt. Im Gegensatz zu einer einfachen Fotodiode verfügt der Detektor 24 jedoch über mehrere elektrische Kontakte. Dadurch kommt es zu einer Aufteilung des Fotostroms an den seitlich angeordneten Elektroden in Abhängigkeit von der Position des Lichtflecks. Die Position in x- und y-Richtung kann durch Bildung der Stromdifferenz zwischen zwei gegenüberliegenden Elektroden ermittelt werden. Durch Normierung auf den Gesamtstrom ist das Positionssignal unabhängig von der einfallenden Lichtintensität.

Das kuppelförmige Sichtfenster 6, das als Schutzvorrichtung gegen äußere Einflüsse fungiert, kann als erstes optisches Element, beispielsweise als Linse, zur Abbildung der Objektszene 16 auf die beiden Detektoren 24, 26 verwendet werden. Es ist aus einem Material, welches sowohl für das nahe Infrarot als auch für das mittlere und das ferne Infrarot eine gute Transmission besitzt und gleichzeitig eine hohe Festigkeit aufweist. Für den Spektralbereich vom nahen bis zum fernen Infrarot ist beispielsweise Zinksulfid-Cleartran, eine wasserfreie Form von Zinksulfid mit relativ breitem Transmissionsbereich von 0,5 bis 14 µm, sehr gut geeignet.

Auf dem positionsgebenden Detektor 24, und zwar auf dessen dem Spiegel 14 zugewandten Seite, ist ein spektraler Bandpass-Filter 38 zur Unterdrückung der Hintergrundstrahlung und zur Störunterdrückung aufgebracht. Der Filter 38 ist im nahen Infrarot-Wellenlängenbereich undurchlässig bis auf den speziellen Wellenlängenbereich des Markierungslasers, in dem der Filter durchlässig ist. Im mittleren Infrarot und im langwelligen Infrarot ist der Filter durchlässig.

Figur 2 zeigt ein schematisches Schaltbild des Lateraleffekt-Detektors 24 und daran angeschlossener Verstärkerelektronik. Der Detektor 24 umfasst vier Signalausgänge 42, die jeweils mit einer Ausleseelektronik 40 verbunden sind, von denen der Übersichtlichkeit halber in Figur 2 nur eine dargestellt ist. Ebenfalls mit den Ausleseelektroniken 40 verbunden ist das Steuermittel 30, das außerdem zur Zielführung und somit zur Steuerung des Flugkörpers 4 vorgesehen ist. Die Einstrahlung von Licht auf einen Fleck 44 auf den Detektor 24 löst an jedem der Signalausgänge 42 ein Signal aus. Die Stärke des jeweiligen Signals hängt ab von der Intensität des in den Fleck 44 eingestrahlten Lichts und der Position des Flecks 44 innerhalb der Fläche 46 des Detektors 24. Je näher der Fleck 44 einem der Signalausgänge 42 liegt, desto stärker ist das Signal an diesem Signalausgang 42 und desto schwächer ist das Signal am gegenüberliegenden Signalausgang 42. Einer Position des Flecks 44 im genau den Mittelpunkt der Fläche 46 sind die vier Signale alle gleich stark.

Durch die Verwendung der durchgehenden lichtempfindlichen Fläche 46 kann der Detektor 24 einfach elektronisch kalibriert werden. Im Steuermittel 30 ist ein Speicher vorhanden, in dem eine Positionskalibrierung des positionsgebenden Detektors 24 hinterlegt ist. Diese Positionskalibrierung enthält die Abweichung der optischen Achse von der Stelle der Fläche 46, an der alle vier Signale gleich sind.

Die Ausleseelektroniken 40 umfassen jeweils eine Vorspannungsquelle 48, wobei die Vorspannungsquellen 48 von zwei gegenüberliegenden Signalausgängen 42 mit einer positiven Vorspannung beaufschlagt sind, beispielsweise +15 V, und die Vorspannungsquellen 48 der beiden anderen Signalausgänge 42 mit einer entsprechenden negativen Spannung, entsprechend der p- und n-Dotierung. Zur Entkoppelung der Vorspannung von einer Verstärkerelektronik 50 umfasst jede Ausleseelektronik 40 einen Koppelkondensator 52. Durch das Pulsen des Markierungslasers tritt ein Wechselstrom an den Signalausgängen 42 auf, sodass der Koppelkondensator 52 nicht zu einer Signalunterbrechung führt. Diese Wechselstromkoppelung des Detektors 24 an die Verstärkerelektronik 50 dient zur Reduktion des Hintergrundanteils und zur Auskopplung der DC-Vorspannung. Über einem Verstärkerelement 54 ist ein regelbarer Widerstand 56 geschaltet, sodass eine variable Verstärkung der Signale, gesteuert durch das Steuermittel 30, möglich ist. Hierdurch kann das Signal bei einer Zielannäherung des Flugkörpers reduziert und eine Übersteuerung des Detektors 24 bzw. der Verstärkerelektronik 50 vermieden werden.

Die Ströme aus den Signalausgängen 42 werden über die Ausleseelektronik 40 einer Signal-Verarbeitungselektronik zugeführt, die beispielsweise im Steuermittel 30 oder zwischen Steuermittel 30 und Ausleseelektroniken 40 angeordnet sein kann. Diese Signal-Verarbeitungselektronik digitalisiert die Signale und verarbeitet sie abhängig von der funktionalen Phase, also abhängig davon, ob das Signal als solches mit Hilfe des Übergabecodes gefunden werden soll, oder ob Ablagewinkel gefunden werden sollen, mit einer speziellen Algorithmik. Für eine digitale Schnittstelle werden diese Status- bzw. Ablagesignale an den Autopiloten gegeben. Eine weitere elektrische Schnittstelle dient zur Betriebsspannungszuführung.

Ein Betrieb des Gegenstanderfassungssystems 8 kann wie folgt gestaltet werden. In einer Initialisierungsphase werden alle Hardware- und Softwarefunktionen der Detektoren 24, 26 und der Elektronik durch das Steuermittel 30 aktiviert und in den Grundzustand versetzt. Außerdem wird dem Steuermittel 30 der Frequenzcode übergeben, mit dem das Ziel durch den Markierungslaser angeleuchtet wird. Die Initialisierungsphase kann beispielsweise durch einen Abschuss angeregt werden.

In einer nachfolgenden ersten Akquisitionsphase sucht das Steuermittel 30 in Verbindung mit dem positionsgebenden Detektor 24 mit Hilfe des Codes das Licht des Markierungslasers. Dazu werden alle Pulse detektiert, die einen Schwellwert überschreiten. Abhängig vom Algorithmus wird zur sicheren Synchronisation eine Pulsfolge von drei bis sechs Pulsen benötigt.

In der anschließenden ersten Nachführphase werden die vom Detektor 24 gelieferten aktuellen Ablagewinkel - beispielsweise in Form von zwei orthogonal zueinander stehenden Vektoren - bezüglich eines suchkopffesten Koordinatensystems präzise bestimmt und zur Nachführung des Kreiselsystems verwendet. Entsprechend der Ablagewinkel kann beispielsweise die Optik 10 in Richtung des erkannten Ziels geführt werden, wobei der Kreisel 28 die Bewegung der Optik 10 erkennt und das Steuermittel 30 anhand entsprechender Rudersignale den Flugkörper 4 in Richtung auf das Ziel 18 ausrichtet.

Ist die Optik 10 - oder bei starrer Optik 10 der Flugkörper 4 - auf das Ziel 18 zumindest im Wesentlichen ausgerichtet, beginnt die zweite Akquisitionsphase, in der der bildgebende Detektor 26 das Ziel 18 erkennt. Hierzu werden die aktuellen Ablagewinkel ins Infrarotbild des Detektors 26 übernommen und damit eine Zielmarkierung durchgeführt, wodurch das Ziel 18 eindeutig festgelegt ist. In der anschließenden zweiten Nachführphase werden die Ablagewinkel des Ziels 18 durch Algorithmen einer Bildverarbeitung durch das Steuermittel 30 zur Nachführung der Optik 10 bestimmt, woraus sich mit Hilfe des Kreisels 28 eine Sichtliniendrehrate ermitteln lässt, die zur Lenkung des Flugkörpers 4 verwendet wird. Diese Phase kann bis zum Erreichen des Ziels 18 andauern.

Nach der zweiten Akquisitionsphase, also nach Erkennen des Ziels 18 durch die Bildverarbeitung, kann der Flugkörper 4 sowohl mit Hilfe des bildgebenden Detektors 26 und der Bildverarbeitung als auch - bei bestehender Markierung des Ziels - alleine durch den positionsgebenden Detektor 24 und den entsprechenden Ausleseelektroniken 40 ins Ziel 18 geführt werden. Die Anflugphase ist somit sowohl mit dem halbaktiven Lasersystem als auch mit dem bildgebenden System möglich. Hierdurch ist die Zielführung besonders unanfällig gegen Störungen. Alternativ kann nach der Akquisitionsphase der Bildverarbeitung das Markieren des Ziels 18 durch den Markierungslaser beendet werden und der Flugkörper 8 kann alleine mit Hilfe des bildgebenden Detektors 26 und der Bildverarbeitung ins Ziel 18 geführt werden.

### Bezugszeichenliste

- 2: Suchkopf
- 4: Flugkörper
- 6: Sichtfenster
- 8: Gegenstandserfassungssystem
- 10: Optik
- 12: Spiegel
- 14: Spiegel
- 16: Objektszene
- 18: Ziel
- 20: Strahlengang
- 22: Detektorsystem
- 24: Positionsgebender Detektor
- 26: Bildgebender Detektor
- 28: Kreisel
- 30: Steuermittel
- 32: Kühlfinger
- 34: Gehäuse
- 38: Filter
- 40: Ausleseelektronik
- 42: Signalausgang
- 44: Fleck
- 46: Fläche
- 48: Vorspannungsquelle
- 50: Verstärkerelektronik
- 52: Koppelkondensator
- 54: Verstärkerelement
- 56: Widerstand

## Patentansprüche

1. Gegenstandserfassungssystem (8) mit einem Bilderfassungssystem mit einem bildgebenden Detektor (26), einem Positionserfassungssystem mit einem positionsgebenden Detektor (24) und einer Optik (10), die einfallende Strahlung auf beide Detektoren (24, 26) lenkt,
**dadurch gekennzeichnet,**
**dass** beide Detektoren (24, 26) im Strahlengang (20) hintereinander, insbesondere aneinander, angeordnet sind.

2. Gegenstandserfassungssystem (8) nach Anspruch 1,
**dadurch gekennzeichnet,**
**dass** der positionsgebende Detektor (24) für Strahlung, für die der bildgebende Detektor (26) empfindlich ist, durchlässig ist.

3. Gegenstandserfassungssystem (8) nach einem der vorhergehenden Ansprüche,
**dadurch gekennzeichnet,**
**dass** beide Detektoren (24, 26) in der Bildebene des Strahlengangs (20) angeordnet sind.

4. Gegenstandserfassungssystem (8) nach einem der vorhergehenden Ansprüche,
**dadurch gekennzeichnet,**
**dass** der positionsgebende Detektor (24) ein Lateraleffekt-Detektor ist.

5. Gegenstandserfassungssystem (8) nach einem der vorhergehenden Ansprüche,
**dadurch gekennzeichnet,**
**dass** beide Detektoren (24, 26) unterschiedlich große Gesichtsfelder abdecken.

6. Gegenstandserfassungssystem (8) nach einem der Ansprüche 1 bis 4,
**dadurch gekennzeichnet,**
**dass** beide Detektoren (24, 26) gleich große Gesichtsfelder abdecken.

7. Gegenstandserfassungssystem (8) nach einem der vorhergehenden Ansprüche,
**dadurch gekennzeichnet,**
**dass** das Gesichtsfeld des bildgebenden Detektors (26) im Gesichtsfeld, insbesondere zentriert im Gesichtsfeld, des positionsgebenden Detektors (24) liegt.

8. Gegenstandserfassungssystem (8) nach einem der vorhergehenden Ansprüche,
**dadurch gekennzeichnet,**
**dass** der bildgebende Detektor (26) zentriert zum positionsgebenden Detektor (24) angeordnet ist.

9. Gegenstandserfassungssystem (8) nach einem der vorhergehenden Ansprüche,
**dadurch gekennzeichnet,**
**dass** der positionsgebende Detektor (24) starr auf einem Gehäuse (34) des bildgebenden Detektors (26) aufgebracht ist.

10. Gegenstandserfassungssystem (8) nach einem der vorhergehenden Ansprüche,
**dadurch gekennzeichnet,**
**dass** der positionsgebende Detektor (24) ein Eintrittsfenster des bildgebenden Detektors (26) bildet.

11. Gegenstandserfassungssystem (8) nach einem der vorhergehenden Ansprüche,
**dadurch gekennzeichnet,**
**durch** einen Spektralfilter (38) mit einem Transmissionsfenster im Wellenlängenbereich des positionsgebenden Detektors (24), einem Transmissionsfenster im Wellenlängenbereich des bildgebenden Detektors (26) und einem strahlungsundurchlässigen Bereich zwischen den beiden Transmissionsfenstem.

12. Gegenstandserfassungssystem (8) nach einem der vorhergehenden Ansprüche, **gekennzeichnet**
**dass** beide Detektoren (24, 26) jeweils mit einer eigenen Kühleinheit verbunden sind und die Kühleinheiten ineinander angeordnet sind.

13. Gegenstandserfassungssystem (8) nach einem der vorhergehenden Ansprüche,
**dadurch gekennzeichnet,**
**dass** Detektorausgänge des positionsgebenden Detektors (24) zur Unterdrückung von Hintergrundstrahlung über einen Koppelkondensator (52) mit einer Verstärkerelektronik (50) verbunden sind.

14. Gegenstandserfassungssystem (8) nach einem der vorhergehenden Ansprüche, **gekennzeichnet**
**durch** eine Verstärker für Signale des positionsgebenden Detektors (24), der zu einer variablen Anpassung der Verstärkung ausgebildet ist.

15. Gegenstandserfassungssystem (8) nach einem der vorhergehenden Ansprüche, **gekennzeichnet**
**durch** ein Steuermittel (30) mit einem Speicher, in dem eine Positionskalibrierung des positionsgebenden Detektors (24) hinterlegt ist.
